# FASCICULE DE BREVET EUROPEEN

(11) **EP 2 909 909 B1**
(45) Date de publication et mention de la délivrance du brevet: **10.05.2017**
(21) Numéro de dépôt: 13777090.5
(22) Date de dépôt: 17.10.2013
(51) Int. Cl.: H02H 3/16, H02H 3/33, H02H 7/20, H02H 7/10

(54) **SYSTÈME DE PROTECTION D'UNE PLURALITÉ DE SOURCES DE TENSION CONTINUES**
SCHUTZEINRICHTUNG FÜR EINE MEHRZAHL VON GLEICHSPANNUNGSQUELLEN
PROTECTION SYSTEM FOR A PLURALITY OF DIRECT VOLTAGE SUPPLIES

(30) Priorité: 18.10.2012 FR 1259950
(43) Date de publication de la demande: 26.08.2015
(73) Titulaire: Schneider Electric Industries SAS, 92500 Rueil-Malmaison (FR)
(72) Inventeur: STEPANEK, Jiri, F-38130 Echirolles (FR); TIAN, Simon, 38050 GRENOBLE Cedex 09 (FR); DOMEJEAN, Eric, F-38340 Voreppe (FR); CADOUX, Yvan, F-38960 Saint-Aupre (FR)
(74) Mandataire: Lavoix
(86) Numéro de dépôt international: PCT/EP2013/071744
(87) Numéro de publication internationale: WO 2014/060527

(56) Documents cités:
- EP-A2- 2 463 977
- US-A- 4 638 245
- US-A1- 2012 019 964
- US-A1- 2012 048 325

## Description

La présente invention concerne un système de protection d'une pluralité de sources de tension continue propres à être connectées en parallèle entre une première et une deuxième borne d'entrée d'un onduleur de tension, l'onduleur de tension étant propre à convertir une tension continue d'entrée en une tension alternative de sortie, chaque source de tension continue étant connectée par un premier conducteur électrique à la première borne d'entrée et par un deuxième conducteur électrique à la deuxième borne d'entrée.

L'invention concerne également une centrale de production d'une tension alternative, comprenant l'onduleur de tension, la pluralité de sources de tension continue connectées en parallèle entre les deux bornes d'entrée de l'onduleur, et un tel système de protection de la pluralité de sources de tension continue.

L'invention concerne également un procédé de protection de la pluralité de sources de tension continue.

On connaît du document EP 1 291 997 A2 une centrale de production du type précité. La centrale de production comporte un onduleur de tension propre à convertir la tension continue délivrée par un champ de cellules solaires, en une tension alternative fournie à un réseau. Le champ de cellules solaires forme une pluralité de sources de tension continue connectées en parallèle et entre les bornes d'entrée de l'onduleur.

La centrale de production comporte également un système de protection de la pluralité de sources de tension continue, le système de protection comportant un détecteur de défaut à la terre, c'est-à-dire un détecteur de défaut d'isolement d'un conducteur électrique par rapport à une masse électrique. En cas de détection d'un défaut à la terre, le détecteur commande l'arrêt de l'onduleur de tension afin d'isoler les sources de tension continue.

Le document US 2012/0048325 A1 décrit un dispositif photovoltaïque de génération d'énergie comprenant un onduleur, un détecteur de défaut à la terre et un interrupteur positionné entre l'onduleur et un câble de connexion d'un ensemble de panneaux photovoltaïques.

Le document US 4 638 245 A décrit un appareil de protection contre les défauts à la terre d'une source de courant continu non reliée à la terre.

EP 2 463 977 A2 décrit un groupeur de puissance continu relié par deux conducteurs à un ensemble de panneaux photovoltaïques et comprenant un interrupteur prévu pour déconnecter les panneaux lorsqu'une mesure de courant différentiel entre les deux conducteurs est supérieure à une valeur prédéfinie.

US 2012/019964 A1 décrit un onduleur relié électriquement à un réseau de panneaux photovoltaïques et une méthode d'isolation du réseau par rapport à l'onduleur en cas de détection d'un défaut à la terre.

Toutefois, un tel système de protection entraîne une perte d'exploitation importante en cas de détection d'un défaut à la terre, puisque l'onduleur de tension est arrêté et la centrale de production ne fournit alors plus de tension alternative au réseau.

Le but de l'invention est donc de proposer un système de protection permettant de réduire les pertes d'exploitation en cas de défaut à la terre, c'est-à-dire en cas de défaut d'isolement d'un conducteur électrique par rapport à la masse électrique.

A cet effet, l'invention a pour objet un système de protection selon la revendication 1.

L'invention a pour objet un système de protection selon les revendications dépendantes 2 à 9.

L'invention a également pour objet une centrale de production d'une tension alternative selon la revendication 10.

L'invention a également pour objet une centrale de production d'une tension alternative selon la revendication dépendante 11.

L'invention a également pour objet un procédé de protection d'une pluralité de sources de tension selon la revendication 12

L'invention a également pour objet un procédé de protection d'une pluralité de sources de tension selon la revendication dépendante 13.

Ces caractéristiques et avantages de l'invention apparaitront à la lecture de la description qui va suivre, donnée uniquement à titre d'exemple non limitatif, et faite en référence aux dessins annexés, sur lesquels :

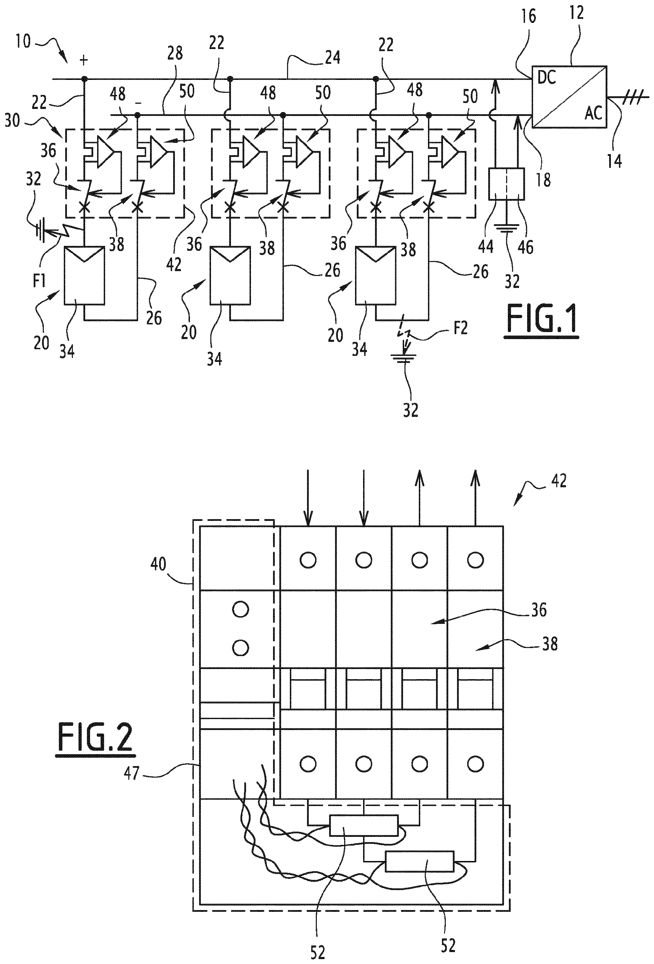

- la figure 1 est une représentation schématique d'une centrale de production d'une tension alternative selon un premier mode de réalisation de l'invention, la centrale comprenant un onduleur de tension, une pluralité de sources de tension continue connectées en parallèle et entre des bornes d'entrée de l'onduleur, et un système de protection de la organe de coupure et un premier détecteur d'un défaut d'isolement du premier conducteur par rapport à une masse électrique, le premier détecteur et le premier organe de coupure associé étant connectés en série entre la source de tension continue correspondante et la première borne d'entrée de l'onduleur, et
- la figure 2 est une représentation schématique d'un dispositif de protection de la figure 1, le dispositif de protection comportant un premier et un deuxième détecteur de défaut d'isolement ;
- la figure 3 est une représentation schématique de chaque détecteur de défaut d'isolement de la figure 2, le détecteur comportant un capteur de courant relié, d'une part, à un étage de détection d'un signal de référence, et d'autre part, à un organe de calcul d'un courant direct et d'un courant inverse ;
- la figure 4 est une représentation schématique de l'étage de détection de la figure 3 ;
- la figure 5 est un organigramme de fonctionnement du système de protection lors de l'apparition d'un premier défaut à la terre ;
- la figure 6 est un organigramme de fonctionnement du système de protection lors de l'apparition d'un deuxième défaut à la terre ;
- la figure 7 est une vue analogue à celle de la figure 1, selon un deuxième mode de réalisation de l'invention ;
- la figure 8 est un organigramme de fonctionnement du système de protection selon le deuxième mode de réalisation lors de l'apparition d'un courant inverse et d'une différence de courant entre les deux polarités du courant continu en entrée de l'onduleur ; et
- la figure 9 est une vue analogue à celle de la figure 2 selon un troisième mode de réalisation.

Sur la figure 1, une centrale 10 de production d'une tension alternative comprend un onduleur de tension 12 propre à convertir une tension continue d'entrée en la tension alternative, la tension alternative présentant au moins une phase et l'onduleur 12 comportant une borne de sortie 14 pour la ou chaque phase, ainsi qu'une première borne d'entrée 16 et une deuxième borne d'entrée 18.

La centrale de production 10 comprend également une pluralité de sources de tension continue 20 connectées en parallèle entre les deux bornes d'entrée 16, 18 de l'onduleur.

La centrale de production 10 comprend une pluralité de premiers conducteurs électriques 22 de liaison de chaque source de tension continue 20 respective avec la première borne d'entrée 16, les premiers conducteurs 22 étant reliés électriquement entre eux et à la première borne d'entrée 16 par une première ligne électrique 24.

La centrale de production 10 comprend également une pluralité de deuxièmes conducteurs électriques 26 de liaison de chaque source de tension continue 20 respective avec la deuxième borne d'entrée 18, les deuxièmes conducteurs électriques 26 étant reliés électriquement entre eux et à la deuxième borne d'entrée 18 par une deuxième ligne électrique 28.

La centrale de production 10 comprend également un système 30 de protection de la pluralité de sources de tension continue 20, notamment vis-à-vis d'un défaut d'isolement d'un ou de plusieurs conducteurs électriques parmi les premiers et deuxièmes conducteurs électriques 22, 26 par rapport à une masse électrique 32.

Dans l'exemple de la réalisation de la figure 1, la tension alternative délivrée par l'onduleur 12 est une tension triphasée, et l'onduleur 12 comporte alors trois bornes de sortie 14.

L'onduleur de tension 12 est connu en soi, et comporte des interrupteurs électroniques commandables, non représentés, les interrupteurs électroniques étant commutés suivant une voie de commande afin de convertir la tension continue d'entrée en la tension triphasée de sortie.

Dans l'exemple de réalisation de la figure 1, la première borne d'entrée 16 correspond à la polarité positive de la tension continue d'entrée, et est également appelée borne positive d'entrée. La deuxième borne d'entrée 18 correspond à la polarité négative de la tension continue d'entrée, et est également appelée borne négative d'entrée.

Chaque source de tension continue 20 est connectée par un premier conducteur respectif 22 à la première borne d'entrée 16 et par un deuxième conducteur respectif 26 à la deuxième borne d'entrée 18. Chaque source de tension continue 20 comporte au moins un panneau photovoltaïque 34. Dans l'exemple de réalisation de la figure 1, chaque source de tension continue 20 comporte un panneau photovoltaïque 34.

En variante non représentée, chaque source de tension continue 20 comporte une pluralité de panneaux photovoltaïques 34 connectés en série ou en parallèle entre les bornes d'entrée 16, 18.

Dans l'exemple de réalisation de la figure 1, les premiers conducteurs électriques 22 et la première ligne électrique 24 correspondent à la polarité positive de la tension continue, la première ligne 24 étant également appelée ligne positive. Les deuxièmes conducteurs électriques 26 et la deuxième ligne électrique 28 correspondent à la polarité négative de la tension continue fournie en entrée de l'onduleur 12, et la deuxième ligne électrique 28 est également appelée ligne négative.

Le système de protection 30 comprend, pour chaque source de tension continue 20, un premier organe de coupure électrique 36 connecté au premier conducteur 22 correspondant, un deuxième organe de coupure électrique 38 connecté au deuxième conducteur 26 correspondant et un appareil auxiliaire 40 associé aux premiers et deuxièmes organes de coupure 36, 38. Le premier organe de coupure 36, le deuxième organe de coupure 38 et l'appareil auxiliaire 40 forment un dispositif 42 de protection de la source de tension continue 20 correspondante, comme représenté sur les figures 1 et 2.

Dans l'exemple de réalisation de la figure 1, le système de protection 30 comprend, pour chaque source de tension continue 20, un dispositif de protection 42 correspondant.

Le système de protection 30 comprend un premier générateur 44 d'un premier signal prédéterminé de référence. En complément, le système de protection 30 comprend un deuxième générateur 46 d'un deuxième signal prédéterminé de référence.

Chaque premier organe de coupure 36 et chaque deuxième organe de coupure 38 sont, par exemple, des disjoncteurs, tels que des disjoncteurs magnétothermiques. Dans l'exemple de réalisation de la figure 2, les premier et deuxième organes de coupure 38 d'un même dispositif de protection 42 sont formés par un disjoncteur à quatre pôles, chaque organe de coupure 36, 38 correspondant à deux pôles du disjoncteur. Dans cet exemple de réalisation, le premier organe de coupure 36 et le deuxième organe de coupure 38 sont couplés mécaniquement par une barre de déclenchement, non représentée, afin de permettre une ouverture simultanée des premier et deuxième organes de coupure 36, 38.

Chaque appareil auxiliaire 40 comprend un boitier de protection 47 et un premier détecteur 48 d'un défaut d'isolement du premier conducteur 22 correspondant par rapport à la masse électrique 32, le premier détecteur 48 étant disposé dans le boitier de protection 47.

En complément, chaque appareil auxiliaire 40 comprend un deuxième détecteur 50 d'un défaut d'isolement du deuxième conducteur 26 correspondant par rapport à la masse électrique 32, le deuxième détecteur 50 étant disposé dans le boitier de protection 47.

Le premier générateur 44 est connecté entre la masse électrique 32 et la première borne d'entrée 16, afin d'injecter le premier signal de référence sur la première ligne électrique 24. Le premier signal de référence présente une fréquence prédéterminée non nulle, par exemple égale à 2,5 Hz, afin de ne pas être confondu avec le courant continu circulant dans la première ligne électrique 24 et dans les premiers conducteurs 22.

Le deuxième générateur 46 est connecté entre la masse électrique 32 et la deuxième borne d'entrée 18, afin d'injecter le deuxième signal de référence sur la deuxième ligne électrique 28. Le deuxième signal de référence présente une fréquence prédéterminée non nulle, par exemple égale à 2,5 Hz, afin de ne pas être confondu avec le courant continu circulant dans la deuxième ligne électrique 28 et dans le deuxième conducteur électrique 26.

En variante non représentée, le système de protection 30 comprend un seul générateur parmi les premier et deuxième générateurs 44, 46, le signal de référence injecté sur l'une des lignes parmi les première et deuxième lignes électriques 24, 28 étant propre à revenir sur l'autre ligne parmi les première et deuxième lignes électriques 24, 28 de par un couplage impédant entre les première et deuxième lignes électriques 24, 28. Le couplage impédant des première et deuxième lignes électriques 24, 28 est, par exemple, réalisé via l'onduleur de tension 12.

Le premier détecteur 48 et le premier disjoncteur 36 associés sont connectés en série entre la source de tension continue 20 correspondante et la première borne d'entrée 16 de l'onduleur.

Le premier détecteur 48 est propre à détecter le premier signal de référence pour la détection de défaut d'isolement, le premier signal de référence circulant entre le premier détecteur 48 correspondant et le premier générateur 44 via la masse électrique 32 en cas de défaut d'isolement (flèche F1).

Le deuxième détecteur 50 et le deuxième disjoncteur 38 associés sont connectés en série entre la source de tension continue 20 correspondante et la deuxième borne d'entrée 18 de l'onduleur.

Le deuxième détecteur 50 est propre à détecter le deuxième signal de référence pour la détection de défaut d'isolement, le deuxième signal de référence circulant entre le deuxième détecteur 50 et le deuxième générateur 46 via la masse électrique 32 en cas de défaut d'isolement sur un deuxième conducteur 26 correspondant (flèche F2).

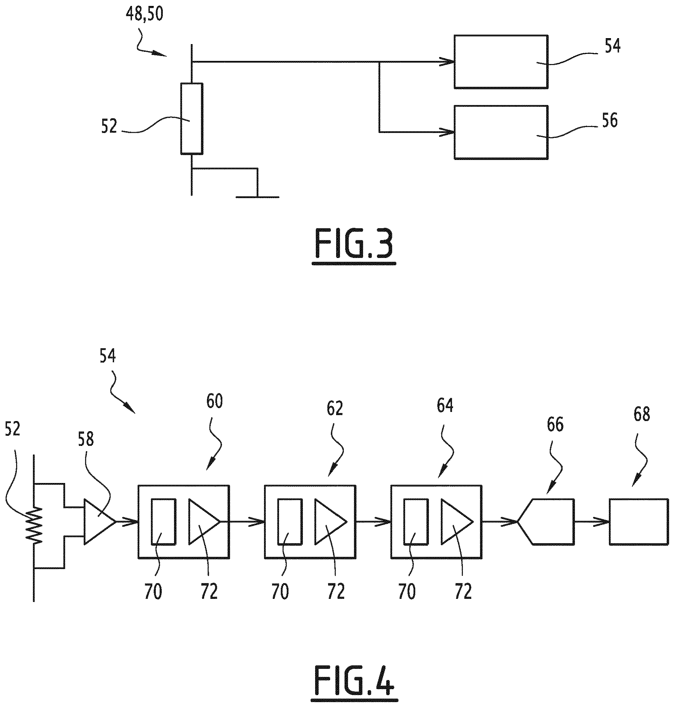

Chaque détecteur 48, 50 comporte un capteur de courant 52 propre à mesurer l'intensité du courant circulant dans le conducteur électrique 22, 26 correspondant, un étage 54 de détection du premier ou deuxième signal de référence et un organe 56 de calcul d'un courant direct et d'un courant inverse, comme représenté sur la figure 3.

Dans l'exemple de réalisation des figures 2 à 4, le capteur de courant 52 est un shunt.

Dans le mode de réalisation décrit, chaque détecteur 48, 50 est propre à déclencher l'organe de coupure 36, 38 associé en cas de détection par ledit détecteur d'un défaut d'isolement d'un conducteur 22, 26 correspondant par rapport à la masse électrique 32. Autrement dit, le premier détecteur 48 forme un moyen de déclenchement du premier disjoncteur 36 associé, en cas de détection du défaut d'isolement du premier conducteur 22 correspondant par rapport à la masse électrique 32. Le deuxième détecteur 50 forme, de manière analogue, un moyen de déclenchement du deuxième disjoncteur 38 associé, en cas de détection du défaut d'isolement du deuxième conducteur 26 correspondant par rapport à la masse électrique 32.

L'étage de détection 54, visible sur la figure 4, est connecté aux extrémités du capteur de courant 52. Il comporte un amplificateur différentiel 58, un premier 60, un deuxième 62 et un troisième 64 étages de filtrage, connectés en série en sortie de l'amplificateur différentiel 58, un convertisseur analogique numérique 66 connecté en sortie du troisième étage de filtrage 64 et un réducteur de bruit 68 connecté en sortie du convertisseur analogique numérique 66. L'étage de détection 54 est propre à détecter un courant alternatif, à savoir le premier et/ou le deuxième signal de référence.

En variante non représentée, les sorties des amplificateurs différentiels 58 des deux détecteurs 48, 50 sont sommées entre elles. Ceci permet de sommer les signaux de mesures issus des deux capteurs de courant 52 et d'augmenter le rapport signal sur bruit lorsque les signaux de mesures issus des capteurs de courant présentent une faible valeur.

L'organe de calcul 56 est connu en soi, et est propre à calculer l'intensité du courant direct à partir de l'intensité mesurée par le capteur de courant 52. L'organe de calcul 56 est également propre à calculer l'intensité du courant inverse, à partir de l'intensité mesurée par le capteur de courant 52, le courant inverse étant susceptible d'apparaître en cas de présence d'un double défaut d'isolement par rapport à la masse électrique 52, c'est-à-dire d'un défaut d'isolement d'un premier conducteur 22 pour une source continue donnée suivi de manière quasi-simultanée d'un défaut pour un deuxième conducteur 26 par rapport à la masse électrique 32 pour une autre source de tension continue.

Chaque étage de filtrage 60, 62, 64 comporte un filtre passe-haut 70 et un filtre passe-bas 72 connecté en sortie du filtre passe-haut 70.

Le filtre passe-haut 70 est destiné à supprimer la composante continue de l'intensité mesurée. Le filtre passe-haut 70 présente une première fréquence de coupure, de valeur de préférence inférieure à 1 Hz, afin de supprimer la composante continue tout en conservant le premier ou deuxième signal de référence de fréquence par exemple égale à 2,5 Hz. La première fréquence de coupure du filtre passe-haut 70 est inférieure à la fréquence du premier ou deuxième signal de référence.

Le filtre passe-bas 72 connecté en sortie du filtre passe-haut 70 est destiné à supprimer les composantes de fréquences supérieures à celle du premier ou deuxième signal de référence, afin de pouvoir détecter ce signal en cas de défaut d'isolement. Le filtre passe-bas 72 présente une deuxième fréquence de coupure, de valeur par exemple égale à 10 Hz, la fréquence du premier ou du deuxième signal de référence étant par exemple égale à 2,5 Hz. La deuxième fréquence de coupure du filtre passe-bas 72 est supérieure à la fréquence du premier ou deuxième signal de référence, afin de conserver ledit signal de référence.

Autrement dit, chaque étage de filtrage 60, 62, 64 forme un filtre passe-bande afin de conserver essentiellement les fréquences comprises entre la première fréquence de coupure et la deuxième fréquence de coupure, c'est-à-dire l'information correspondant au premier ou au deuxième signal de référence.

Chaque étage de filtrage 60, 62, 64 présente en outre un gain important, l'ensemble des trois étages de filtrage 60, 62, 64 présentant un gain total de valeur supérieure à 1000, de préférence égale à 100000.

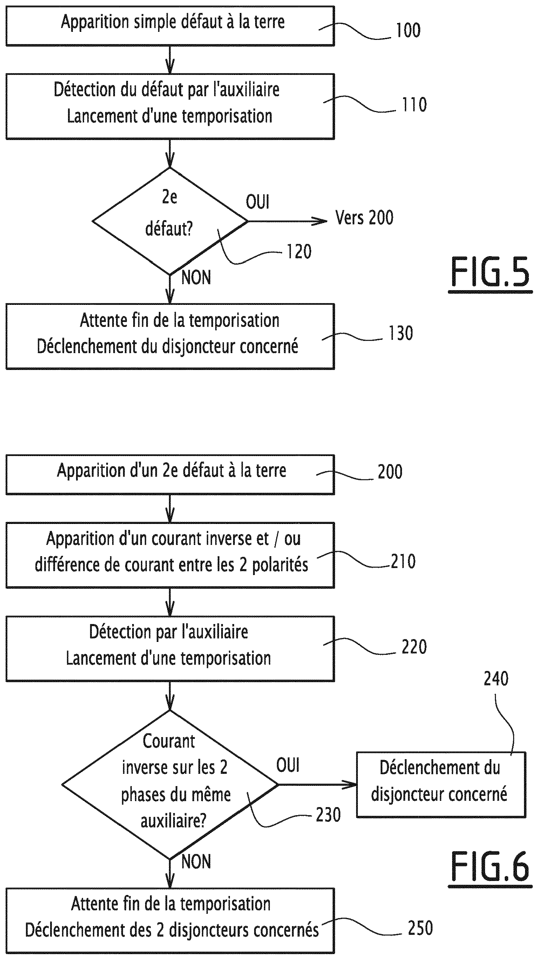

Le fonctionnement du système de protection 30 selon l'invention va désormais être expliqué à l'aide des figures 5 et 6.

Sur la figure 5, en cas d'apparition d'un premier défaut d'isolement d'un conducteur électrique 22, 26 par rapport à la masse électrique 32 (étape 100), le premier ou deuxième signal de référence, selon que le conducteur en défaut d'isolement est le premier conducteur 22 ou le deuxième conducteur 26, circule dans la boucle en défaut. Le premier ou deuxième signal de référence est alors détecté par le détecteur 48, 50 correspondant de l'appareil auxiliaire lors de l'étape 110. Le détecteur 48, 50 ayant détecté le défaut d'isolement, lance alors une temporisation ou un délai de validation du défaut.

Si un deuxième défaut n'apparaît pas pendant la temporisation lors de l'étape 120, alors le détecteur 48, 50 ayant précédemment détecté le défaut déclenche à la fin de la temporisation l'organe de coupure 36, 38 concerné lors de l'étape 130.

Dans le mode de réalisation décrit, le disjoncteur à quatre pôles correspondant à l'organe de coupure 36, 38 concerné est déclenché dans ce cas par le détecteur 48, 50 ayant précédemment détecté le défaut. Autrement dit, les premier et deuxième organes de coupure 36, 38 correspondant à la source de tension continue 20 concernée par le défaut d'isolement sont alors déclenchés.

La source de tension continue 20 concernée est donc isolée du reste de la centrale de production 10 de par l'ouverture des premier et deuxième organes de coupure 36, 38 correspondants. La centrale de production 10 est alors de nouveau opérationnelle sans avoir eu besoin d'arrêter l'onduleur 12, et en continuant de produire la tension alternative à l'aide de l'onduleur 12 et des autres sources de tension continue 20 qui ne sont pas en défaut.

Si au contraire un deuxième défaut apparaît pendant la temporisation lors de l'étape 120, alors l'apparition de ce deuxième défaut à la terre (étape 200) entraîne l'apparition d'un courant inverse et/ou d'une différence de courant entre la polarité positive et la polarité négative (étape 210). Le courant inverse est un courant circulant du premier défaut (flèche F1) jusqu'au deuxième défaut (sens opposé à celui de la flèche F2) via la masse électrique 32. Un tel courant inverse est généralement important, puisqu'il est seulement limité par l'impédance des premier et deuxième défauts et par la résistance de la masse électrique 32.

Ce courant inverse et/ou cette différence de courant entre les deux polarités est alors détectée lors de l'étape 220 par l'organe de calcul 56 de l'appareil auxiliaire 40 correspondant. Le détecteur 48, 50 concerné lance une temporisation.

Au cours de l'étape suivante 230, si le courant inverse est déterminé pour les deux phases d'un même appareil auxiliaire 40, alors les deux défauts d'isolement sont éliminés lors de l'étape 240 via le déclenchement des premiers et deuxièmes organes de coupure 36, 38 associés à cet appareil auxiliaire 40, c'est-à-dire dans le mode de réalisation décrit via le déclenchement du disjoncteur à quatre pôles associé à cet appareil auxiliaire 40.

Dans l'exemple de réalisation décrit, où les premiers et deuxièmes organes de coupure 36, 38 sont des disjoncteurs magnétothermiques, si l'intensité du courant inverse de défaut est inférieure à 0,7 fois l'intensité nominale du disjoncteur correspondant, notée In, alors les disjoncteurs 36, 38 restent fermés. Si l'intensité du courant inverse de défaut est comprise entre 0,7 fois In et 3,2 fois In pour la courbe B du disjoncteur, alors l'appareil auxiliaire 40 va déclencher les deux disjoncteurs 36, 38 dans un laps de temps compris entre 20ms et 30ms. Si l'intensité du courant inverse de défaut est comprise entre 3,2 fois In et 7 fois In, cela correspond à une zone de fonctionnement dans laquelle à la fois l'appareil auxiliaire 40 et le circuit magnétique du disjoncteur 36, 38 concerné sont susceptibles de commander le déclenchement du disjoncteur 36, 38. En tout état de cause, le laps de temps nécessaire au déclenchement sera compris entre 10ms et 30ms, ce qui permet d'avoir une ouverture quasi-simultanée des deux disjoncteurs 36, 38 associés au double défaut. Enfin, si l'intensité du courant inverse de défaut est supérieure à 7 fois In, alors les circuits magnétiques des deux disjoncteurs 36, 38 vont commander le déclenchement des disjoncteurs 36, 38. Le laps de temps nécessaire au déclenchement sera inférieur à 12ms, ce qui permet d'avoir une meilleure simultanéité de l'ouverture des deux disjoncteurs 36, 38 associés au double défaut.

Si au contraire, le courant inverse est déterminé entre les polarités positive et négative de deux appareils auxiliaires 40 distincts, alors les premier et deuxième organes de coupure 36, 38 des deux appareils auxiliaires 40 concernés sont déclenchés à la fin de la temporisation lors de l'étape 250. Ladite temporisation est de préférence inférieure à 20 ms.

Dans le mode de réalisation décrit, les deux disjoncteurs à quatre pôles correspondant aux deux appareils auxiliaires 40 concernés sont déclenchés dans ce cas par les détecteurs 48, 50 ayant précédemment détecté ces deux défauts. Autrement dit, le double défaut est supprimé via le déclenchement des deux disjoncteurs à quatre pôles associés aux deux appareils auxiliaires 40 concernés.

Les conditions de déclenchement des premier et deuxième disjoncteurs magnétothermiques 36, 38 et le laps de temps nécessaire au déclenchement correspondant sont identiques à celles décrites précédemment pour l'étape 240.

Les deux disjoncteurs à quatre pôles ont une courbe de déclenchement gérée par électronique et permettent donc une précision et une reproductibilité très bonne du déclenchement. Les deux disjoncteurs à quatre pôles vont donc opérer une ouverture simultanée ou quasi-simultanée. De ce fait, la tension coupée va être répartie sur les contacts des deux disjoncteurs à quatre pôles. Pour une tension continue U en entrée de l'onduleur 12, chaque contact de disjoncteur 36, 38 devra couper une tension seulement égale à U/2. La tension U en entrée de l'onduleur 12 est, par exemple, égale à 1 kV, et la tension à couper par chaque disjoncteur 36, 38 est alors égale à soit 500 V. Ceci permet d'utiliser des disjoncteurs 36, 38 moins coûteux.

Les deux sources de tension continue 20 concernées sont donc isolées du reste de la centrale de production 10 de par l'ouverture des premier et deuxième organes de coupure 36, 38 correspondants.

Ainsi, même en cas d'un double défaut d'isolement de conducteurs différents par rapport à la masse électrique 32, l'onduleur de tension 12 n'est pas arrêté, et seules les sources de tension continues 20 présentant un défaut d'isolement à leurs extrémités sont isolées du reste de la centrale de production 10, pendant que les autres sources de tension continue 20 qui ne présentent pas de défaut restent opérationnelles. Cela permet de localiser le défaut d'isolement et de poursuivre la production de la tension alternative via l'onduleur de tension 12.

Le système de protection 30 selon l'invention permet alors d'assurer la protection des sources de tension continue 20, c'est-à-dire la protection des panneaux photovoltaïques 34 et des liaisons électriques reliant les panneaux 34 aux organes de coupure 36, 38. Le système de protection 30 protège les sources de tension continue 20 notamment vis-à-vis d'un défaut de connexion électrique entre un panneau 34 et un organe de coupure 36, 38, vis-à-vis d'un défaut entre l'intérieur d'un panneau 34 et la masse électrique 32 ou encore vis-à-vis d'un défaut entre une liaison électrique de connexion d'un panneau 34 à un organe de coupure 36, 38 correspondant et la masse électrique 32.

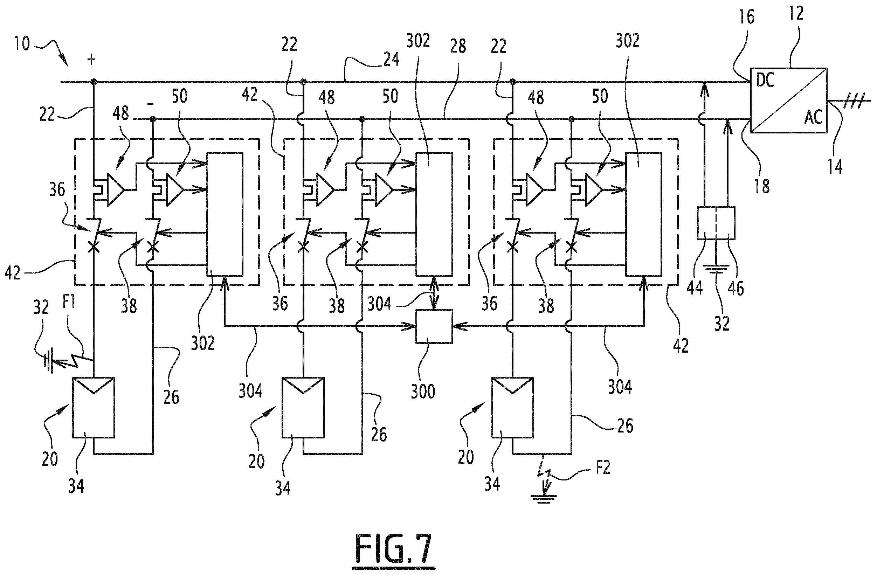

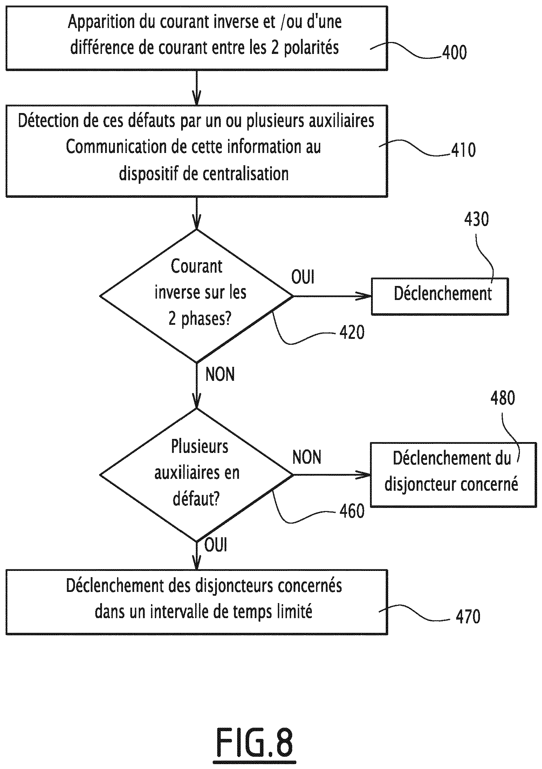

Les figures 7 et 8 illustrent un deuxième mode de réalisation de l'invention pour lequel les éléments analogues au premier mode de réalisation, décrit précédemment, sont repérés par des références identiques, et ne sont pas décrits à nouveau.

Selon le deuxième mode de réalisation, le système de protection 30 comprend en outre un dispositif 300 de centralisation des défauts détectés, le dispositif de centralisation 300 étant propre à communiquer avec chaque détecteur 48, 50 et à envoyer un signal de déclenchement à destination du ou des organes de coupure 36, 38 correspondant en cas de détection d'un ou de plusieurs défauts d'isolement.

Autrement dit, selon le deuxième mode de réalisation, le dispositif de centralisation 300 forme un moyen de déclenchement du premier organe de coupure 36 concerné en cas de détection du défaut d'isolement d'un premier conducteur 22 correspondant par rapport à la masse électrique 32. En complément, le dispositif de centralisation 300 forme un moyen de déclenchement du deuxième organe de coupure 38 concerné en cas de détection du défaut d'isolement d'un deuxième conducteur 28 correspondant par rapport à la masse électrique 32.

Dans l'exemple de réalisation de la figure 7, le dispositif de protection 42 associé à chaque source de tension continue 20 comporte en outre un organe de communication 302, relié à la fois au premier détecteur 48 et au deuxième détecteur 50, l'organe de communication 302 étant commun aux deux détecteurs 48, 50 et propre à permettre la communication de données entre les détecteurs 48, 50 et le dispositif de centralisation 300, via une liaison de données 304.

En variante non représentée, le système de protection 30 comprend, pour chaque premier détecteur 48, un premier organe de communication avec le dispositif de centralisation 300, et pour chaque deuxième détecteur 50, un deuxième organe de communication avec le dispositif de centralisation 300.

La liaison de données 304 est de préférence une liaison radioélectrique. En variante, la liaison de données 304 est une liaison filaire.

Le fonctionnement du système de protection 30 selon le deuxième mode de réalisation est analogue à celui du premier mode de réalisation, décrit précédemment. Le fonctionnement du système de protection 30 selon le deuxième mode de réalisation va en outre être précisé dans le cas d'un double défaut d'isolement à l'aide de l'organigramme de la figure 8.

En cas de double défaut d'isolement par rapport à la masse électrique 32, un courant inverse et/ou une différence de courant entre les polarités positive et négative apparaissent lors de l'étape 400.

La détection de ces défauts d'isolement est alors effectuée par les détecteurs 48, 50 d'un ou de plusieurs appareils auxiliaires 40, lors de l'étape 410. Les défauts d'isolement détectés par les détecteurs 48, 50 sont alors communiqués au dispositif de centralisation 300 à l'aide du ou des organes de communication 302 correspondants.

Lors de l'étape suivante 420, le dispositif de centralisation 300 détermine si le courant inverse déterminé est présent sur les deux phases d'un même dispositif de protection 42, et le cas échéant, envoie un signal de déclenchement, lors de l'étape 430, aux premier et deuxième organes de coupure 36, 38 du dispositif de protection 42 correspondant. Dans l'exemple de réalisation décrit, le disjoncteur à quatre pôles correspondant aux premier et deuxième organes de coupure 36, 38 du dispositif de protection 42 est déclenché. Les conditions de déclenchement des premier et deuxième disjoncteurs magnétothermiques 36, 38 et le laps de temps nécessaire au déclenchement correspondant sont identiques à celles décrites précédemment pour le premier mode de réalisation en regard de l'étape 240 de la figure 6.

Sinon, le dispositif de centralisation détermine, lors de l'étape 460, si plusieurs appareils auxiliaires 40 ont détecté chacun un défaut d'isolement par rapport à la masse électrique 32.

Lors de cette étape 460, si les détecteurs 48, 50 d'un seul appareil auxiliaire 40 ont détecté un défaut d'isolement, alors les premier et deuxième organes de coupure 36, 38 associés à cet appareil auxiliaire 40 sont déclenchés lors de l'étape 480. Dans l'exemple de réalisation décrit, seul le disjoncteur quadripôle associé à l'appareil auxiliaire 40 correspondant est alors déclenché via le dispositif de centralisation 300.

Les conditions de déclenchement des premier et deuxième disjoncteurs magnétothermiques 36, 38 et le laps de temps nécessaire au déclenchement correspondant sont à nouveau identiques à celles décrites précédemment pour le premier mode de réalisation en regard de l'étape 240 de la figure 6.

Sinon, dans le cas où plusieurs appareils auxiliaires 40 ont détecté un défaut d'isolement via leur détecteur 48, 50 respectif, alors les premier et deuxième organes de coupure 36, 38 associés à chacun de ces appareils auxiliaires 40 ayant détecté un défaut d'isolement sont déclenchés par des signaux correspondants émis par le dispositif de centralisation 300. Autrement dit, dans l'exemple de réalisation décrit, les disjoncteurs quadripôles associés aux appareils auxiliaires 40 ayant détectés les défauts d'isolement sont déclenchés, le déclenchement des disjoncteurs concernés se produisant dans un intervalle de temps limité, par exemple dans un intervalle de temps inférieur à 20 ms.

Les conditions de déclenchement des premier et deuxième disjoncteurs magnétothermiques 36, 38 et le laps de temps nécessaire au déclenchement correspondant sont à nouveau identiques à celles décrites précédemment pour le premier mode de réalisation en regard de l'étape 240 de la figure 6.

Les deux disjoncteurs à quatre pôles vont donc opérer une ouverture simultanée ou quasi-simultanée. De ce fait, la tension coupée va être répartie sur les contacts des deux disjoncteurs à quatre pôles. Pour une tension continue U en entrée de l'onduleur 12, chaque contact de disjoncteur 36, 38 devra couper une tension seulement égale à U/2.

A l'issue du déclenchement des disjoncteurs concernés, les sources de tension continues 20 présentant un défaut d'isolement à leurs extrémités sont alors isolées du reste de la centrale de production 10, de sorte que la centrale de production 10 fonctionne à nouveau normalement afin de délivrer la tension alternative à partir de l'onduleur de tension 12. L'onduleur 12 est alimenté en entrée par les sources de tension continue 20 ne présentant pas de défaut d'isolement à leur borne et n'ayant pas été isolées par le déclenchement précédent des disjoncteurs concernés.

Le système de protection 30 selon le deuxième mode de réalisation permet alors d'offrir une meilleure coordination du déclenchement des organes de coupure 36, 38 concernés suite à l'apparition d'un ou de plusieurs défauts d'isolement. Le système de protection 30 selon le deuxième mode de réalisation permet notamment de mieux maîtriser l'intervalle de temps au cours duquel l'ensemble des organes de coupure 36, 38 sont déclenchés dans le cas de plusieurs défauts d'isolement par rapport à la masse électrique 32.

Les autres avantages de ce deuxième mode de réalisation sont identiques à ceux du premier mode de réalisation, et ne sont pas décrits à nouveau.

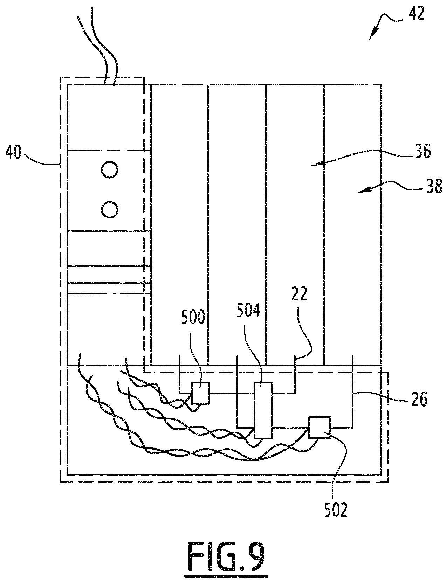

La figure 9 illustre un troisième mode de réalisation de l'invention pour lequel les éléments analogues au premier mode de réalisation, décrit précédemment, sont repérés par des références identiques, et ne sont pas décrits à nouveau.

Selon le troisième mode de réalisation, le premier détecteur 48 comporte un premier capteur de courant continu 500 propre à mesurer l'intensité du courant circulant dans le premier conducteur électrique 22 correspondant. Le deuxième détecteur 50 comporte un deuxième capteur de courant continu 502 propre à mesurer l'intensité du courant continu circulant dans le deuxième conducteur électrique 26 correspondant.

L'appareil auxiliaire 40 comporte en outre un transformateur électrique 504 pour mesurer la somme des courants circulant dans les deux conducteurs électriques 22, 26.

Autrement dit, selon le troisième mode de réalisation, chaque appareil auxiliaire 40 comporte le premier capteur de courant continu 500, le deuxième capteur de courant continu 502 et le transformateur électrique 504, en lieu et place des deux capteurs de courant 52, tels que des shunts, des premier et deuxième modes de réalisation.

Le transformateur 504 permet en outre de détecter le premier signal de référence et/ou le deuxième signal de référence, les deux capteurs de courant continu 500, 502 permettant la détection de courant inverse et/ou la différence de courant entre les polarités positive et négative.

Le système de protection 30 selon le troisième mode de réalisation permet d'avoir des mesures de courant moins sensibles au bruit qu'avec les shunts 52 des premier et deuxième modes de réalisation. Cette variante de mesure des courants circulant dans les premier et deuxième conducteurs électriques 22, 26 est toutefois plus onéreuse que celle décrite à l'aide de shunts pour les premier et deuxième modes de réalisation.

On conçoit ainsi que le système de protection 30 selon l'invention permet de réduire les pertes d'exploitation en cas de défaut d'isolement d'un conducteur électrique 22, 26 par rapport à la masse électrique 32.

## Revendications

1. Système (30) de protection d'une pluralité de sources de tension continue (20) propres à être connectées en parallèle entre une première (16) et une deuxième (18) bornes d'entrée d'un onduleur de tension (12), l'onduleur de tension (12) étant propre à convertir une tension continue d'entrée en une tension alternative de sortie, chaque source de tension continue (20) étant connectée par un premier conducteur électrique (22) à la première borne d'entrée (16) et par un deuxième conducteur électrique (26) à la deuxième borne d'entrée (18),
le système de protection (30)comprenant, pour chaque source de tension continue (20), un premier organe de coupure (36) et un premier détecteur (48) d'un défaut d'isolement du premier conducteur (22) par rapport à une masse électrique (32), le premier détecteur (48) et le premier organe de coupure (36) associé étant connectés en série entre la source de tension continue (20) correspondante et la première borne d'entrée (16) de l'onduleur, et
le système de protection (30) comprenant des moyens (48 ; 300) de déclenchement, en cas de détection du défaut d'isolement, du premier organe de coupure (36) associé afin d'ouvrir la liaison électrique correspondant audit premier conducteur (22),
le système de protection (30) étant **caractérisé en ce qu'**il comprend, en outre, pour chaque source de tension continue (20), un deuxième organe de coupure (38) et un deuxième détecteur (50) d'un défaut d'isolement du deuxième conducteur (26) par rapport à la masse électrique (32), le deuxième détecteur (50) et le deuxième organe de coupure (38) associé étant connectés en série entre la source de tension continue (20) correspondante et la deuxième borne d'entrée (18) de l'onduleur, et
**en ce que** le système (30) comprend des moyens (50 ; 300) de déclenchement, en cas de détection du défaut d'isolement, du deuxième organe de coupure (38) associé afin d'ouvrir la liaison électrique correspondant audit deuxième conducteur (26).

2. Système (30) selon la revendication 1, dans lequel le système (30) comprend en outre un premier générateur (44) d'un premier signal prédéterminé de référence, le premier générateur (44) étant propre à être connecté entre la masse électrique (32) et la première borne d'entrée (16), le premier signal de référence présentant une fréquence prédéterminée non nulle, et
dans lequel chaque premier détecteur (48) est propre à détecter le premier signal de référence pour la détection de défaut, le premier signal de référence étant propre à circuler entre le premier détecteur (48) correspondant et le premier générateur (44) via la masse électrique (32) en cas de défaut d'isolement.

3. Système (30) selon la revendication 1 ou 2, dans lequel le système (30) comprend en outre un deuxième générateur (46) d'un deuxième signal prédéterminé de référence, le deuxième générateur (46) étant propre à être connecté entre la masse électrique (32) et la deuxième borne d'entrée (18), le deuxième signal de référence présentant une fréquence prédéterminée non nulle, et
dans lequel chaque deuxième détecteur (50) est propre à détecter le deuxième signal de référence pour la détection de défaut, le deuxième signal de référence étant propre à circuler entre le deuxième détecteur (50) correspondant et le deuxième générateur (46) via la masse électrique (32) en cas de défaut d'isolement.

4. Système (30) selon l'une quelconque des revendications 1 à 3, dans lequel le système (30) comprend, pour chaque source de tension continue (20), un appareil auxiliaire (40), chaque appareil auxiliaire (40) comportant un boitier de protection (47), le premier détecteur (48) et le deuxième détecteur (50), les détecteurs (48, 50) étant disposés dans le boitier de protection (47).

5. Système (30) selon la revendication 4, dans lequel le premier détecteur (48) comporte un premier capteur de courant continu (500) propre à mesurer l'intensité du courant continu circulant dans le premier conducteur électrique (22), le deuxième détecteur (50) comporte un deuxième capteur de courant continu (502) propre à mesurer l'intensité du courant continu circulant dans le deuxième conducteur électrique (26), et l'appareil auxiliaire (40) comporte en outre un transformateur électrique (504) pour mesurer la somme des courants circulant dans les deux conducteurs électriques (22, 26).

6. Système (30) selon l'une quelconque des revendications 1 à 5, dans lequel chaque détecteur (48, 50) comporte un capteur de courant (52), tel qu'un shunt, propre à mesurer l'intensité du courant circulant dans le conducteur électrique (22, 26) correspondant.

7. Système (30) selon la revendication 5 ou 6, dans lequel chaque détecteur (48, 50) comporte un filtre passe-haut (70), afin de supprimer la composante continue de l'intensité mesurée.

8. Système (30) selon l'une quelconque des revendications 5 à 7, dans lequel chaque détecteur (48, 50) comporte un organe de calcul (56) propre à calculer l'intensité d'un courant direct et l'intensité d'un courant inverse à partir de l'intensité mesurée par le capteur de courant (52 ; 500, 502).

9. Système (30) selon l'une quelconque des revendications précédentes, dans lequel le système (30) comprend en outre un dispositif (300) de centralisation des défauts détectés, le dispositif de centralisation (300) étant propre à communiquer avec chaque détecteur (48, 50) et, en cas de détection d'un ou plusieurs défauts d'isolement, à envoyer un signal de déclenchement à destination du ou des organes de coupure (36, 38) correspondants.

10. Centrale (10) de production d'une tension alternative, comprenant :
- un onduleur de tension (12), propre à convertir une tension continue d'entrée en la tension alternative, la tension alternative présentant au moins une phase, l'onduleur (12) comportant une borne de sortie (14) pour la ou chaque phase, une première (16) et une deuxième (18) bornes d'entrée,
- une pluralité de sources de tension continue (20) connectées en parallèle entre les deux bornes d'entrée (16, 18) de l'onduleur, chaque source de tension continue (20) étant connectée par un premier conducteur électrique (22) à la première borne d'entrée (16) et par un deuxième conducteur électrique (26) à la deuxième borne d'entrée (18), et
- un système (30) de protection de la pluralité de sources de tension continue (20), **caractérisée en ce que** le système de protection (30) est conforme à l'une quelconque des revendications précédentes.

11. Centrale (10) selon la revendication 10, dans laquelle chaque source de tension continue (20) comporte au moins un panneau photovoltaïque (34).

12. Procédé de protection d'une pluralité de sources de tension continue (20) propres à être connectées en parallèle entre une première (16) et une deuxième (18) bornes d'entrée d'un onduleur de tension (12), l'onduleur de tension (12) étant propre à convertir une tension continue d'entrée en une tension alternative de sortie, chaque source de tension continue (20) étant connectée par un premier conducteur électrique (22) à la première borne d'entrée (16) et par un deuxième conducteur électrique (26) à la deuxième borne d'entrée (18),
le procédé de protection comprenant les étapes suivantes :
- la détection (110), par un premier détecteur (48) de défaut d'isolement, d'un premier défaut d'isolement du premier conducteur (22) par rapport à une masse électrique (32), et
- le déclenchement (130), en cas de détection du premier défaut d'isolement par rapport à la masse électrique (32), d'un premier organe de coupure (36) associé afin d'ouvrir la liaison électrique correspondant audit premier conducteur (22), le premier détecteur (48) et le premier organe de coupure (36) associé étant connectés en série entre la source de tension continue (20) correspondante et la première borne d'entrée (16) de l'onduleur,
le procédé de détection étant **caractérisé en ce qu'**il comprend les étapes suivantes :
- la détection (220 ; 410), par un deuxième détecteur (50) de défaut d'isolement, d'un deuxième défaut d'isolement du deuxième conducteur (26) par rapport à la masse électrique (32), et
- le déclenchement (240, 250 ; 470, 480), en cas de détection du deuxième défaut d'isolement par rapport à la masse électrique (32), d'un deuxième organe de coupure (38) associé afin d'ouvrir la liaison électrique correspondant audit deuxième conducteur (26), le deuxième détecteur (50) et le deuxième organe de coupure (38) associé étant connectés en série entre la source de tension continue (20) correspondante et la deuxième borne d'entrée (18) de l'onduleur.

13. Procédé de protection selon la revendication 12, dans lequel lors de l'étape de déclenchement (250 ; 470) du deuxième organe de coupure (38) en cas de détection du deuxième défaut d'isolement par rapport à la masse électrique (32), le déclenchement du deuxième organe de coupure (38) est commandé de manière simultanée avec le déclenchement du premier organe de coupure (36), de préférence à 20 ms près, de manière à avoir une ouverture simultanée des premier et deuxième organes de coupure (36, 38), de préférence à 20 ms près.

## Patentansprüche

1. Schutzsystem (30) für eine Mehrzahl von Gleichspannungsquellen (20), die geeignet sind, zwischen einem ersten (16) und einem zweiten (18) Eingangsanschluss eines Spannungswechselrichters (12) parallel geschaltet zu werden, wobei der Spannungswechselrichter (12) geeignet ist, eine Eingangsgleichspannung in eine Ausgangswechselspannung umzuwandeln und jede Gleichspannungsquelle (20) über einen ersten elektrischen Leiter (22) mit dem ersten Eingangsanschluss (16) und über einen zweiten elektrischen Leiter (26) mit dem zweiten Eingangsanschluss (18) verbunden ist, wobei
das Schutzsystem (30) für jede Gleichspannungsquelle (20) ein erstes Trennelement (36) und einen ersten Detektor (48) eines Isolierfehlers des ersten Leiters (22) in Bezug auf elektrische Masse (32) umfasst, wobei der erste Detektor (48) und das erste zugeordnete Trennelement (36) zwischen der korrespondierenden Gleichspannungsquelle (20) und dem ersten Eingangsanschluss (16) des Wechselrichters in Reihe geschaltet sind, und
das Schutzsystem (30) Mittel (48; 300) zum Auslösen des ersten zugeordneten Trennelements (36) im Fall des Detektierens eines Isolierfehlers, um die entsprechende elektrische Verbindung zum ersten Leiter (22) zu trennen, umfasst,
das Schutzsystem (30) **dadurch gekennzeichnet ist, dass** es außerdem für jede Gleichspannungsquelle (20) ein zweites Trennelement (38) und einen zweiten Detektor (50) eines Isolierfehlers des zweiten Leiters (26) in Bezug auf die elektrische Masse (32) umfasst, wobei der zweite Detektor (50) und das zweite zugeordnete Trennelement (38) zwischen der korrespondierenden Gleichspannungsquelle (20) und dem zweiten Eingangsanschluss (18) des Wechselrichters in Reihe geschaltet sind, und
dass das System (30) Mittel (50; 300) zum Auslösen des zweiten zugeordneten Trennelements (38) im Falle des Detektierens eines Isolierfehlers umfasst, um die korrespondierende elektrische Verbindung zum zweiten Leiter (26) zu trennen.

2. System (30) nach Anspruch 1, bei dem das System außerdem einen ersten Generator (44) eines ersten vorbestimmten Referenzsignals umfasst, wobei der erste Generator (44) geeignet ist, zwischen die elektrische Masse (32) und den ersten Eingangsanschluss (16) geschaltet zu werden, wobei das erste Referenzsignal eine vorbestimmte Frequenz aufweist, die nicht null ist, und
bei dem jeder erste Detektor (48) geeignet ist, das erste Referenzsignal für das Detektieren des Fehlers zu detektieren, wobei das erste Referenzsignal geeignet ist, zwischen dem ersten korrespondierenden Detektor (48) und dem ersten Generator (44) über die elektrische Masse (32) im Fall eines Isolierfehlers zu fließen.

3. System (30) nach Anspruch 1 oder 2, bei dem das System (30) außerdem einen zweiten Generator (46) eines zweiten vorbestimmten Referenzsignals umfasst, wobei der zweite Generator (46) geeignet ist, zwischen die elektrische Masse (32) und den zweiten Eingangsanschluss (18) geschaltet zu werden, wobei das zweite Referenzsignal eine vorbestimmte Frequenz aufweist, die nicht null ist, und
bei dem jeder zweite Detektor (50) geeignet ist, das zweite Referenzsignal für die Detektion des Fehlers zu detektieren, wobei das zweite Referenzsignal geeignet ist, zwischen dem zweiten korrespondierenden Detektor (50) und dem zweiten Generator (46) über die elektrische Masse (32) im Falle eines Isolierfehlers zu fließen.

4. System (30) nach einem beliebigen der Ansprüche 1 bis 3, bei dem das System (30) für jede Gleichspannungsquelle (20) eine Hilfsvorrichtung (40) umfasst, die ein Schutzgehäuse (47), den ersten Detektor (48) und den zweiten Detektor (50) aufweist, wobei die Detektoren (48, 50) in dem Schutzgehäuse (47) angeordnet sind.

5. System (30) nach Anspruch 4, bei dem der erste Detektor (48) einen ersten Gleichstromsensor (500) aufweist, der geeignet ist, die Stärke des in dem ersten elektrischen Leiter (22) fließenden Gleichstrom zu messen, der zweite Detektor (50) einen zweiten Gleichstromsensor (502) aufweist, der geeignet ist, die Stärke des in dem zweiten elektrischen Leiter (26) fließenden Gleichstroms zu messen, und die Hilfsvorrichtung (40) außerdem einen elektrischen Transformator (504) aufweist, um die Summe der in den zwei elektrischen Leitern (22, 26) fließenden Ströme zu messen.

6. System (30) nach einem beliebigen der Ansprüche 1 bis 5, bei dem jeder Detektor (48, 50) einen Stromsensor (52), wie einen Shunt, aufweist, der geeignet ist, die Stärke des in dem korrespondierenden elektrischen Leiter (22, 26) fließenden Stroms zu messen.

7. System (30) nach Anspruch 5 oder 6, bei dem jeder Detektor (48, 50) einen Hochpass (70) aufweist, um die Gleichkomponente der gemessenen Stromstärke zu unterdrücken.

8. System (30) nach einem beliebigen der Ansprüche 5 bis 7, bei dem jeder Detektor (48, 50) ein Berechnungselement (56) aufweist, das geeignet ist, die Stärke eines Gleichstroms und die Stärke eines Rückstroms aus der von dem Stromsensor (52; 500, 502) gemessenen Stromstärke zu berechnen.

9. System (30) nach einem beliebigen der vorhergehenden Ansprüche, bei dem das System (30) außerdem eine Vorrichtung (300) zur Zentralisierung der detektierten Fehler umfasst, wobei die Zentralisierungsvorrichtung (300) geeignet ist, mit jedem Detektor (48, 50) zu kommunizieren und im Falle des Detektierens eines oder mehrerer Isolierfehler ein Auslösesignal zu dem entsprechenden oder den entsprechenden Trennelementen (36, 38) zu schicken.

10. Wechselspannungserzeugungsanlage (10), umfassend:
- einen Spannungswechselrichter (12), der geeignet ist, eine Eingangsgleichspannung in eine Wechselspannung umzuwandeln, wobei die Wechselspannung mindestens eine Phase aufweist und der Wechselrichter (12) einen Ausgangsanschluss (14) für die oder jede Phase, einen ersten (16) und einen zweiten (18) Eingangsanschluss aufweist,
- eine Mehrzahl von Gleichspannungsquellen (20), die zwischen den zwei Eingangsanschlüssen (16, 18) des Wechselrichters parallelgeschaltet sind, wobei jede Gleichspannungsquelle (20) über einen ersten elektrischen Leiter (22) mit dem ersten Eingangsanschluss (16) und über einen zweiten elektrischen Leiter (26) mit dem zweiten Eingangsanschluss (18) verbunden ist, und
- ein System (30) zum Schutz der Mehrzahl von Gleichspannungsquellen (20), **dadurch gekennzeichnet, dass** das Schutzsystem nach einem beliebigen der vorhergehenden Ansprüche ausgebildet ist.

11. Anlage (10) nach Anspruch 10, bei dem jede Gleichspannungsquelle (20) mindestens ein Photovoltaikmodul 34 aufweist.

12. Verfahren zum Schützen einer Mehrzahl von Gleichspannungsquellen (20), die geeignet sind, zwischen einem ersten (16) und einem zweiten (18) Eingangsanschluss eines Spannungswechselrichters (12) parallel geschaltet zu werden, wobei der Spannungswechselrichter (12) geeignet ist, eine Eingangsgleichspannung in eine Ausgangswechselspannung umzuwandeln und jede Gleichspannungsquelle (20) über einen ersten elektrischen Leiter (22) mit dem ersten Eingangsanschluss (16) und über einen zweiten elektrischen Leiter (26) mit dem zweiten Eingangsanschluss (18) verbunden ist,
wobei das Verfahren zum Schützen die folgenden Schritte umfasst:
- Detektieren (110) eines ersten Isolierfehlers des ersten Leiters (22) in Bezug auf eine elektrische Masse (32) durch einen ersten Detektor (48) für Isolierfehler, und
- im Falle des Detektierens des ersten Isolierfehlers in Bezug auf die elektrische Masse (32), Auslösen (130) eines ersten zugeordneten Trennelements (36), um die korrespondierende elektrische Verbindung zum ersten Leiter (22) zu trennen, wobei der erste Detektor (48) und das erste zugeordnete Trennelement (36) zwischen der korrespondierenden Gleichspannungsquelle (20) und dem ersten Eingangsanschluss (16) des Wechselrichters in Reihe geschaltet sind,
wobei das Verfahren des Detektierens **dadurch gekennzeichnet ist, dass** es die folgenden Schritte umfasst:
- Detektieren (220; 410) eines zweiten Isolierfehlers des zweiten Leiters (26) in Bezug auf die elektrische Masse (32) durch einen zweiten Detektor (50) für Isolierfehler, und
- im Falle des Detektierens des zweiten Isolierfehlers in Bezug auf die elektrische Masse (32), Auslösen eines zweiten zugeordneten Trennelements (38), um die korrespondierende elektrische Verbindung zu dem zweiten Leiter (26) zu trennen, wobei der zweite Detektor (50) und das zweite zugeordnete Trennelement (38) zwischen der korrespondierenden Gleichspannungsquelle (20) und dem zweiten Eingangsanschluss (18) des Wechselrichters in Reihe geschaltet sind.

13. Verfahren zum Schützen nach Anspruch 12, bei dem bei dem Auslöseschritt (250; 470) des zweiten Trennelements (38) im Fall des Detektierens des zweiten Isolierfehlers in Bezug auf die elektrische Masse (32) die Auslösung des zweiten Trennelements (38) simultan mit dem Auslösen des ersten Trennelements (36), vorzugsweise bis zu 20 ms genau gesteuert wird, um eine gleichzeitige Trennung des ersten und zweiten Trennelements (36, 38), vorzugsweise bis zu 20 ms genau, zu erzielen.

## Claims

1. A system (30) for protecting a plurality of DC voltage sources (20) able to be connected in parallel between a first (16) and second (18) input terminal of a voltage inverter (12), the voltage inverter (12) being able to convert a DC input voltage into an AC output voltage, each DC voltage source (20) being connected by a first electrical conductor (22) to the first input terminal (16) and by a second electrical conductor (26) to the second input terminal (18),
the protection system (30) comprising, for each DC voltage source (20), a first cutoff member (36) and a first detector (48) of an isolation fault of the first conductor (22) with respect to an electrical ground (32), the first detector (48) and the associated first cutoff member (36) being connected in series between the corresponding DC voltage source (20) and the first input terminal (16) of the inverter, and
the protection system (30) comprising means (48; 300) for triggering the associated first cutoff member (36) in case the isolation fault is detected, in order to open the electrical link corresponding to said first conductor (22).
the protection system (30) being further **characterized in that**, for each DC voltage source (20), it comprises a second cutoff member (38) and a second detector (50) of an isolation fault of the second conductor (26) with respect to the electrical ground (32), the second detector (50) and the associated second cutoff member (38) being connected in series between the corresponding DC voltage source (20) and the first input terminal (18) of the inverter, and
**in that** the system (30) comprises means (50; 300) for triggering the associated second cutoff member (38) in case the isolation fault is detected, in order to open the electrical link corresponding to said second conductor (26).

2. The system (30) according to claim 1, wherein the system (30) further comprises a first generator (44) for generating a first predetermined reference signal, the first generator (44) being able to be connected between the electrical ground (32) and the first input terminal (16), the first reference signal having a non-zero predetermined frequency, and
wherein each first detector (48) is able to detect the first reference signal for fault detection, the first reference signal being able to flow between the first corresponding detector (48) and the first generator (44) via the electrical ground (32) in case of isolation fault.

3. The system (30) according to claim 1 or 2, wherein the system (30) further comprises a second generator (46) of a second predetermined reference signal, the second generator (46) being able to be connected between the electrical ground (32) and the second input terminal (18), the second reference signal having a non-zero predetermined frequency, and
wherein each second detector (50) is able to detect the second reference signal for fault detection, the second reference signal being able to flow between the second corresponding detector (50) and the second generator (46) via the electrical ground (32) in case of an isolation fault.

4. The system (30) according to any one of claims 1 to 3, wherein the system (30) comprises an auxiliary apparatus (40) for each DC voltage source (20), each auxiliary apparatus (40) comprising a protective housing (47), the first detector (48) and the second detector (50), the detectors (48, 50) being positioned in the protective housing (47).

5. The system (30) according to claim 4, wherein the first detector (48) comprises a first DC current sensor (500) able to measure the intensity of the DC current flowing in the first electrical conductor (22), the second detector (50) comprises a second DC sensor (502) able to measure the intensity of the DC current flowing in the second electrical conductor (26), and the auxiliary apparatus (40) further comprises an electrical transformer (504) to measure the sum of the current flowing in both electrical conductors (22, 26).

6. The system (30) according to any one of claims 1 to 5, wherein each detector (48, 50) comprises a current sensor (52), such as a shunt, able to measure the intensity of the current flowing in the corresponding electrical conductors (22, 26).

7. The system (30) according to claim 5 or 6, wherein each detector (48, 50) comprises a high-pass filter (70), in order to eliminate the DC component from the measured voltage.

8. The system (30) according to any one of claims 5 to 7, wherein each detector (48, 50) comprises a computation member (56) able to compute the intensity of a DC current and the intensity of a reverse current from the intensity measured by the current sensor (52; 500, 502).

9. The system (30) according to any one of the preceding claims, wherein the system (30) further comprises a device (300) for centralizing the detected faults, the centralizing device (300) being able to communicate with each detector (48, 50) and, if one or more isolation faults are detected, to send a triggering signal to the corresponding cutoff member(s) (36, 38).

10. A DC voltage production unit (10), comprising:
- a voltage inverter (12), able to convert an input DC voltage into an AC voltage, the AC voltage having at least one phase, the inverter (12) comprising an output terminal (14) for the or each phase, and a first (16) and second (18) input terminals,
- a plurality of DC voltage sources (20) connected in parallel across the two input terminals (16, 18) of the inverter, each DC voltage source (20) being connected by a first electrical conductor (22) to the first input terminal (16) and by a second electrical conductor (26) to the second input terminal (18), and
- a protection system (30) for protecting the plurality of DC voltage sources (20),
**characterized in that** the protection system (30) is according to any one of the preceding claims.

11. The unit (10) according to claim 10, wherein each DC voltage source (20) comprises at least one photovoltaic panel (34).

12. A method for protecting a plurality of DC voltage sources (20) to be connected in parallel between a first (16) and second (18) input terminals of the voltage inverter (12), the voltage inverter (12) being able to convert a DC input voltage into an AC output voltage, each DC voltage source (20) being connected by a first electrical conductor (22) to the first input terminal (16) and by a second electrical conductor (26) to the second input terminal (18),
the protection method being **characterized in that** it comprises the following steps:
- detecting (110) by using the first isolation fault detector (48) a first isolation fault of the first conductor (22) relative to an electrical ground (32), and
- triggering (130), in case a first isolation fault is detected relative to the electrical ground (32), a first associated cutoff member (36) in order to open the corresponding electrical link to said first conductor (22), the first detector (48) and the associated first cutoff member (36) being connected in series between the corresponding DC voltage source (20) and the first input terminal (16) of the inverter, and
- detecting (220) by using a second isolation fault detector (50) to detect (220; 410) a second isolation fault of the second conductor (26) relative to the electrical ground (32), and
- triggering (240, 250; 470, 480), in case the second isolation fault is detected relative to the electrical ground (32), an associated second cutoff member (38) in order to open the corresponding electrical link to said second conductor (26), the second detector (50) and the associated second cutoff member (38) being connected in series between the corresponding DC voltage source (20) and the second input terminal (18) of the inverter.

13. The protection method according to claim 12, during the triggering step (250; 470) of the second cutoff member (38) in case a second isolation fault is detected relative to the electrical ground (32), the triggering of the second cutoff member (38) is commanded simultaneously with the triggering of the first cutoff member (36), preferably to within 20 ms, in order to have simultaneous opening of the first and second cutoff members (36, 38), preferably to within 20 ms.
